# EUROPEAN PATENT APPLICATION

(11) **EP 4 488 668 A1**
(43) Date of publication of application: **08.01.2025**
(21) Application number: 23763756.6
(22) Date of filing: 03.03.2023
(51) Int. Cl.: G01N 23/04, G01N 23/083, G01N 23/18, H01M 10/04, H01M 10/058

(54) **X-RAY INSPECTION DEVICE AND X-RAY INSPECTION METHOD**

(30) Priority: 03.03.2022 KR 20220027699
(71) Applicant: SK On Co., Ltd., Seoul 03161 (KR)
(72) Inventor: KIM, Hyung Joon, Daejeon 34124 (KR); SHIN, Dong Whan, Daejeon 34124 (KR)
(74) Representative: Stolmár & Partner Patentanwälte PartG mbB
(86) International application number: PCT/KR2023/002970
(87) International publication number: WO 2023/167558

(57) **Abstract**

An X-ray inspection device according to one embodiment of the present disclosure includes: an X-ray output portion irradiating X-rays to a battery including a cathode, a separator, and an anode in a stacking direction of the cathode and the anode; an X-ray detection portion acquiring a plurality of gray values based the X-rays that have transmitted through the battery; a signal processing portion acquiring an X-ray image including the plurality of gray values; and an inspection portion determining whether the battery is defective based on a distance between a first edge of an anode area including gray values representing the anode layer and a second edge of a cathode area including gray values representing the cathode layer in the X-ray image.

## Description

### [Technical Field]

The present disclosure relates to an X-ray inspection device and an X-ray inspection method, and more specifically, to an X-ray inspection device and an X-ray inspection method detecting battery defects using X-ray.

### [Background Art]

Recently, demand for mobile devices such as smartphones, tablet PCs, and wireless earphones is increasing. In addition, as the development of electric vehicles, batteries for energy storage, robots, and satellites is carried out in a full scale, research is being actively conducted on high-performance secondary batteries that can be repeatedly charged and discharged, as an energy source.

A battery may include a cathode, a cathode, and a separator disposed therebetween. Through a stacking process, a cathode, a separator, and an anode and may be sequentially stacked.

During a stacking process, a defect may occur in which alignment position of electrodes is out of a range of specifications. In this case, direct contact between a cathode and an anode may cause a short circuit, which may cause problems such as such as battery failure, damage, or ignition. To ensure battery stability and improve durability, a technology to quickly and accurately detect defects in electrode alignment is required.

### [Disclosure]

### [Technical Problem]

The present disclosure is intended to provide an X-ray inspection device and X-ray inspection that can quickly and accurately detect battery defects.

### [Technical Solution]

An X-ray inspection device according to one embodiment of the present disclosure may include: an X-ray output portion irradiating X-rays to a battery including a cathode, a separator, and an anode in a stacking direction of the cathode and the anode; an X-ray detection portion acquiring a plurality of gray values based the X-rays that have transmitted through the battery; a signal processing portion acquiring an X-ray image including the plurality of gray values; and an inspection portion determining whether the battery is defective based on a distance between a first edge of an anode area including gray values representing the anode layer and a second edge of a cathode area including gray values representing the cathode layer in the X-ray image.

An X-ray inspection method according to one embodiment of the present disclosure may include: a step of irradiating X-rays to a battery including a cathode, a separator, and an anode in a stacking direction of the cathode and the anode; a step of acquiring a plurality of gray values by detecting the X-rays that have transmitted through the battery; a step of acquiring an X-ray image including the plurality of gray values; and a step of determining whether the battery is defective based on a distance between a first edge of an anode area including gray values representing the anode layer and a second edge of a cathode area including gray values representing the cathode layer in the X-ray image.

### [Advantageous Effects]

According to the present disclosure, an X-ray inspection device and an X-ray inspection that can quickly and accurately detect battery defects.

According to the present disclosure, a defect regarding alignment state of electrode layers within a battery can be quickly and accurately detected without destructing the battery.

### [Description of Drawings]

FIG. 1 shows a diagram for explaining an X-ray inspection device according to one embodiment of the present disclosure.
FIG. 2A shows a cross-sectional diagram of a battery according to one embodiment of the present disclosure.
FIG. 2B shows a floor plan of a battery according to one embodiment of the present disclosure.
FIGS. 3A, 3B, and 3C show diagrams for explaining an X-ray detection portion according to one embodiment of the present disclosure.
FIG. 4 shows a diagram for explaining an X-ray image according to one embodiment of the present disclosure.
FIG. 5A shows a diagram for explaining an area of interest according to one embodiment of the present disclosure.
FIG. 5B shows a diagram for explaining reference information according to one embodiment of the present disclosure.
FIG. 6 shows a diagram for explaining an X-ray image according to one embodiment of the present disclosure.
FIGS. 7A and 7B show diagrams for explaining a battery defect according to one embodiment of the present disclosure.
FIG. 8 shows a diagram for explaining an X-ray inspection method according to one embodiment of the present disclosure.

### [Modes of the Invention]

The structural or functional descriptions of embodiments disclosed in the present specification or application are merely illustrated for the purpose of explaining embodiments according to the technical principle of the present invention, and embodiments according to the technical principle of the present invention may be implemented in various forms in addition to the embodiments disclosed in the specification of application. In addition, the technical principle of the present invention is not construed as being limited to the embodiments described in the present specification or application.

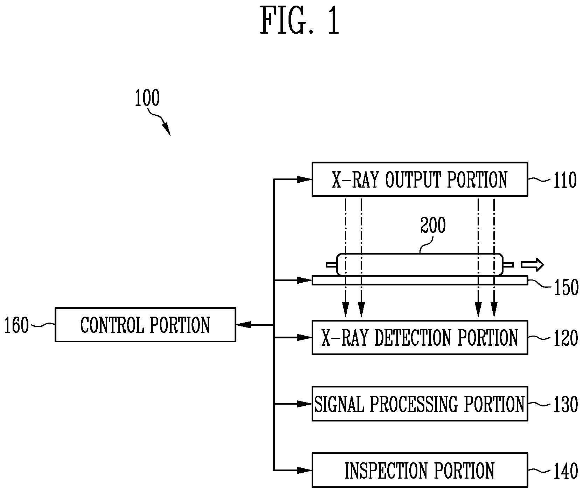

FIG. 1 shows a diagram for explaining an X-ray inspection device according to one embodiment of the present disclosure.

Referring to FIG. 1, an X-ray inspection device 100 according to one embodiment of the present disclosure may include an X-ray output portion 110, an X-ray detection portion 120, a signal processing portion 130, and an inspection portion 140.

An X-ray output portion 110 may generate X-rays. X-rays may be electromagnetic waves that have the property of transmitting an object. For example, X-rays may be electromagnetic waves with a wavelength of 0.01 to 10 nanometers.

In one embodiment, an X-ray output portion 110 may include an X-ray tube, a voltage generator, and a current source.

An X-ray tube may include an anode, a cathode, and a vacuum tube. An anode and a cathode may be disposed within a vacuum tube. For example, an anode and a cathode may each be implemented as a metal such as tungsten (W), molybdenum (Mo), chromium (Cr), rhenium (Re), copper (Cu), cobalt (Co), iron (Fe), tantalum (Ta), and zirconium (Zr) and nickel (Ni) or alloys thereof. An X-ray tube may be of either a closed type, which has a structure in which the inside of a vacuum tube is sealed in a vacuum state, or an open type, which has a structure that maintains a vacuum state inside a vacuum tube when a separate vacuum pump operates. When an X-ray output portion is an open type, the X-ray output portion 110 may further include a vacuum pump. A vacuum pump may create a vacuum inside a vacuum tube.

A current source may generate thermal electrons at an anode by applying a current to heat a filament of the anode. A voltage generator may accelerate thermal electrons by applying a high voltage between an anode and a cathode. For example, a high voltage may be a voltage in a kV unit. In this case, the accelerated thermal electrons may collide with a cathode to generate X-rays. The generated X-rays may be irradiated to a subject.

An X-ray output portion 110 may radiate X-rays to a battery 200. A battery 200 may be a secondary battery that may be reused through charging even after being discharged. For example, a battery 200 may be a lithium ion battery. A battery 200 may include a plurality of electrode layers and a separator interposed between the plurality of electrode layers. A plurality of electrode layers may include at least one anode layer and at least one cathode layer.

An X-ray detection portion 120 may acquire a plurality of gray values based on X-rays that have transmitted through a battery 200. A gray value may be inversely proportional to the intensity of X-rays. For example, the lower the intensity of X-rays, a higher gray value may be acquired.

Specifically, an X-ray detection portion 120 may include a plurality of pixels. A plurality of pixels may be arranged along row and column directions. A pixel may acquire a sensing signal by detecting X-rays that have transmitted through a unit area of a battery 200. In one embodiment, pixels may include a photo-conductor that directly converts X-rays into electrical signals. In another embodiment, pixels may include a scintillator that converts X-rays into visible light and a photo-diode that converts visible light into an electrical signal. An X-ray detection portion 120 may include a pixel calculation portion. An X-ray detection portion 120 may include a pixel calculation portion. A pixel operation portion may convert a sensing signal into a digital value and acquire a gray value. The number of gray values may be equal to or proportional to the number of pixels.

In one embodiment, an X-ray detection portion 120 may acquire a gray value using a time delay integration (TDI) method or a flat panel detection (FPD) method.

A signal processing portion 130 may acquire an X-ray image. An X-ray image may include a plurality of gray values. Each of the plurality of gray values may be arranged along row and column directions in an X-ray image. Each gray value may represent a unit area of a battery 200.

Specifically, a signal processing portion 130 may receive gray values from an X-ray detection portion 120 and acquire an X-ray image including the received gray values. For example, when gray values in line units (or area units) are received from an X-ray detection portion 120, a signal processing portion 130 may arrange currently received gray values in another line (or area) so that the gray values that have already been received may not overlap with their arranged line (or area). A signal processing portion 130 may generate an X-ray image including gray values arranged in each line (or area). Here, a line may represent one row or one column. An area may include a plurality of lines.

An inspection portion 140 may determine whether a battery 200 is defective based on a distance between a first edge of an anode area and a second edge of a cathode area in an X-ray image.

An anode area may include gray values representing an anode layer. A cathode area may include gray values representing a cathode layer. For example, a cathode area represents an area where an anode layer and a cathode layer are stacked together, and each of gray values included in a cathode area may be 30. For example, an anode area may represent an area where an anode layer and a cathode layer are stacked together among areas where an anode layer is stacked, and each of gray values included in an anode area may be 15. An inspection portion 140 may determine an area including a gray value of 30 as a cathode area, and may determine an area including a gray value of 15 as an anode area. However, this is only an example, and a gray value included in a cathode area and an anode area may be modified and implemented in various ways.

A first edge is a part representing an outermost boundary of an anode are. A second edge is a part representing an outermost boundary of a cathode are. Here, a defect in a battery 200 may indicate a defect in alignment of electrode layers included in the battery 200.

In one embodiment, an inspection portion 140 may determine whether a battery 200 is defective based on results of comparing a distance between a first edge of an anode area and a second edge of a cathode area with a reference value. The reference value is a value compared with the distance and may be a preset value.

In one embodiment, a reference value may include a lower limit reference value and an upper limit reference value. For example, an inspection portion 140 may determine that a battery is defective when a distance between a first edge of an anode area and a second edge of a cathode area is lower than or equal to a lower limit reference value. For example, an inspection portion 140 may determine that a battery is defective when a distance between a first edge of an anode area and a second edge of a cathode area is higher than or equal to an upper limit reference value. For example, an inspection portion 140 may determine that a battery 200 is normal when a distance between a first edge of an anode area and a second edge of a cathode area is higher than a lower limit reference value and lower than an upper limit reference value.

In an embodiment, an inspection portion 140 may determine an area corresponding to a battery 200 in an X-ray image.

In one embodiment, an inspection portion 140 may determine an area corresponding to a battery 200 based on a preset pattern included in an X-ray image. For example, an area corresponding to a battery 200 may be set based on a pattern corresponding to an external outline of the battery 200.

In another embodiment, an inspection portion 140 may determine an area corresponding to a battery 200 based on a change in a gray value in a preset direction in an X-ray image. For example, straight lines may be drawn in each of the directions from top to bottom, bottom to top, left to right, and right to left on a two-dimensional X-ray image, and an area of interest may be set by finding points where a gray value changes drastically in each direction.

In an embodiment, an inspection portion 140 may set an area of interest in an area corresponding to a battery 200.

In one embodiment, an inspection portion 140 may select an area of interest. An area of interest may include a part of a first edge and a part of a second edge in an X-ray image. An inspection portion 140 may measure a distance between a part of a first edge and a part of a second edge included in an area of interest. In other words, a distance between a first edge and a second edge may be measured in units of area of interest. The size of an area of interest may be set in advance.

An inspection portion 140 may determine that a battery 200 is defective according to results of comparing a measured distance with a reference value. Here, a reference value may include a lower limit reference value and an upper limit reference value.

In one embodiment, an inspection portion 140 may select a plurality of areas of interest. Each area of interest may include a part of a first edge and a part of a second edge in an X-ray image. A plurality of areas of interest may be areas corresponding to position spaced apart by a preset interval. An inspection portion 140 may measure distances between a part of a first edge and a part of a second edge included in each of a plurality of areas of interest.

Here, the inspection portion 140 may determine whether a battery 200 is defective according to results of comparing an average value of the measured distances and the reference value. Here, the reference value may include a lower limit reference value and an upper limit reference value. For example, an inspection portion 140 may determine that a battery 200 is defective when an average value of the distances is lower than or equal to a lower limit reference value or when the average value is higher than or equal to an upper limit reference value.

In another embodiment, an inspection portion 140 may determine whether a battery 200 is defective based on results of comparing each of the measured distances with a reference value. In this case, the inspection portion 140 may determine that a battery 200 is defective when the number of distances that are lower than or equal to a lower limit reference value among the measured distances is greater than a set number. The inspection portion 140 may determine that a battery 200 is defective when the number of distances that are higher than or equal to an upper limit reference value among the measured distances is greater than a set number.

In one embodiment, an X-ray inspection device 100 may further include a memory storing reference information. Reference information may include information about a lower limit reference value and an upper limit reference value corresponding to the position of an area of interest. In this case, the inspection portion 140 may determine a lower limit reference value and an upper limit reference value corresponding to the position of an area of interest through the reference information. In other words, a lower limit reference value and an upper limit reference value may be applied differently depending on the position of an area of interest.

An X-ray inspection device 100 according to one embodiment may further include at least one of a transfer portion 150 and a control portion 160.

A transfer portion 150 may move a battery 200 in a specific direction. For example, a specific direction may be a horizontal direction. For example, a specific direction may be the X-axis direction. In one embodiment, a transfer portion 150 may include a conveyor and a transfer motor. A transfer motor may transmit a rotational force to a conveyor. When a rotational force is transmitted to a conveyor, a battery 200 positioned at a specific point on the conveyor may be moved to another point.

A control portion 160 may control overall operation of an X-ray inspection device 100. In one embodiment, a control portion 160 may control operation of at least one of an X-ray output portion 110, an X-ray detection portion 120, a signal processing portion 130, an inspection portion 140, and a transfer portion 150. In one embodiment, a control portion 160 may perform data communication operation or data calculation processing operation. For example, a control portion 160 may include a single processor or a plurality of processors.

In one embodiment, an X-ray inspection device 100 may include an X-ray output portion 110, an X-ray detection portion 120, a signal processing portion 130, an inspection portion 140, and a control portion 160. Here, the X-ray inspection device 100 may be a single inspection device, but this is only an example, and it may be implemented as a combination of a plurality of electronic devices. For example, a first electronic device may include an X-ray output portion 110, an X-ray detection portion 120, and a control portion 160, and the second electronic device may include a signal processing portion 130 and an inspection portion 140. A first electronic device and a second electronic device may transmit and receive data according to various communication standards. In this case, the first electronic device is in the form of an X-ray inspection facility, and the second electronic device may be implemented in various forms such as a computer, a laptop computer, a tablet computer, a smartphone, or a mobile device. As such, an X-ray inspection device 100 may be implemented as a combination of various electronic devices.

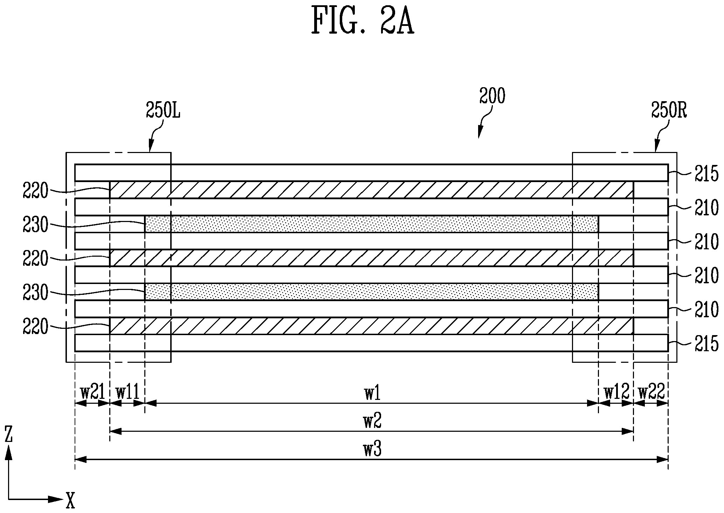

FIG. 2A shows a cross-sectional diagram of a battery according to one embodiment of the present disclosure.

Referring to FIG. 2A, a battery 200 according to one embodiment may include a plurality of electrode layers 220 and 230 and a separator 215. A plurality of electrode layers 220 and 230 may include at least one anode layer 220 and at least one cathode layer 230.

A battery 200 may be formed in a layer structure in which a plurality of electrode layers 220 and 230 and a separator 210 are stacked. An anode layer 220 and a cathode layer 230 may be alternately stacked along the Z-axis direction. A separator 210 may be positioned between an anode layer 220 and a cathode layer 230. A battery 200 may further include a cover 215. A cover 215 may be position on an outermost side of an anode layer 220. A cover 215 may seal an interior of a battery 200 and protect the interior of the battery 200 from an external environment.

An anode layer 220 may include an anode current collector and an anode active material. An anode active material may be a material which lithium ions may be inserted to or extracted from. For example, an anode active material may be any one of carbon-based materials such as crystalline carbon, amorphous carbon, carbon composite, and carbon fiber, lithium alloy, silicon (Si), and tin (Sn). Depending on the embodiment, an anode active material may be natural graphite or artificial graphite, but is not limited to a specific example. An anode current collector may include, for example, any one of stainless steel, nickel (Ni), aluminum (Al), titanium (Ti), copper (Cu), and alloys thereof, and may be provided in various forms such as film, sheet, and foil.

A cathode layer 230 may include a cathode current collector and a cathode active material. A cathode active material may include a material a material which lithium (Li) ions may be inserted to or extracted from. A cathode active material may be a lithium metal oxide. For example, a cathode active material may be one of a lithium manganese-based oxide, a lithium nickel-based oxide, a lithium cobalt-based oxide, a lithium nickel manganese-based oxide, a lithium nickel cobalt manganese-based oxide, a lithium nickel cobalt aluminum-based oxide, a lithium iron phosphate-based compound, a lithium manganese phosphate-based compound, a lithium cobalt phosphate-based compound, and a lithium vanadium phosphate-based compound, but is not necessarily limited to a specific example. A cathode current collector may include, for example, any one of stainless steel, nickel (Ni), aluminum (Al), titanium (Ti), copper (Cu), and alloys thereof, and may be provided in various forms such as film, sheet, and foil.

In one embodiment, each of an anode layer 220 and a cathode layer 230 may further include a binder and a conductive material. A binder mediates bonding between a current collector and an active material layer, thereby improving mechanical stability. A conductive materials may improve electrical conductivity. A conductive material may include a metal-based material.

A separator 210 may prevent electrical contact between an anode layer 220 and a cathode layer 230. A separator 210 may have holes formed therein to allow ions such as lithium ions to pass through.

In one embodiment, a separator 210 may include a porous polymer film or a porous non-woven fabric. Here, a porous polymer film may be formed as a single layer or a multiple layer including a polyolefin-based polymer such as an ethylene polymer, a propylene polymer, an ethylene/butene copolymer, an ethylene/hexene copolymer, and an ethylene/methacrylate copolymer. A porous nonwoven fabric may include at least one of high-melting point glass fibers, polyethylene terephthalate fibers, and a highly heat-resistant separator including ceramic (ceramic coated separator; CCS).

In one embodiment, a battery 200 may further include an electrolyte. An electrolyte may include a material functioning as a mediator that helps the migration of ions such as lithium ions.

Meanwhile, the number of each of an anode layer 220, a cathode layer 230, and a separator 210 may be modified in various ways.

In one embodiment, an X-ray output portion 110 may irradiate X-rays to a battery 200 in a stacking direction. A stacking direction may be a direction in which an anode layer 220 and a cathode layer 230 are stacked. A stacking direction may be a direction perpendicular to an anode layer 220 and a cathode layer 230. For example, a stacking direction may be the Z-axis direction. To this end, an X-ray output portion 110 and an X-ray detection portion 120 may be positioned with a battery 200 therebetween. For example, an X-ray output portion 110 may be position at the top of a battery 200, and an X-ray detection portion 120 may be position at the bottom of the battery 200. For example, an X-ray output portion 110 may be position at the bottom of a battery 200, and an X-ray detection portion 120 may be position at the top of the battery 200.

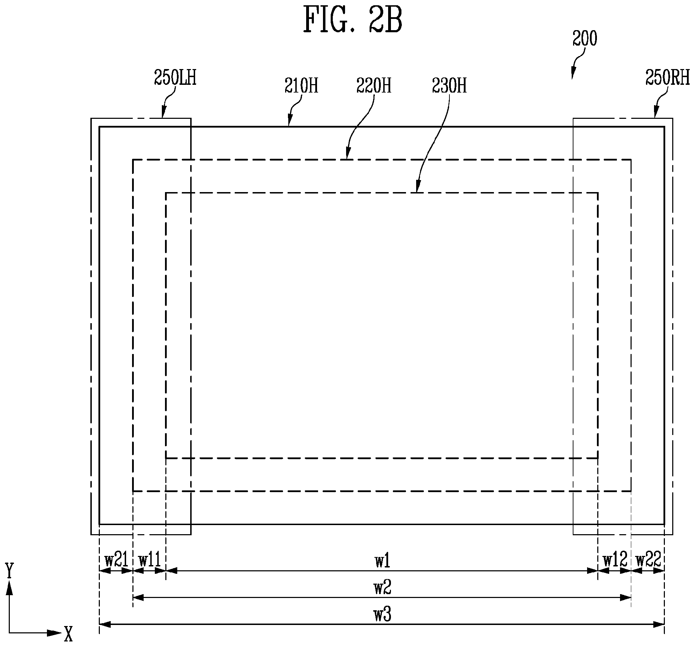

FIG. 2B shows a floor plan of a battery according to one embodiment of the present disclosure.

Referring to FIG. 2B, a battery 200 according to one embodiment may include a plurality of areas 210H to 230H. A plurality of areas 210H to 230H may be areas on the XY-plane perpendicular to the Z-axis. A plurality of areas 210H to 230H may include a first battery area 210H, a second battery area 220H, and a third battery area 230H.

A first battery area 210H may be an area where a separator 210 is stacked, excluding a second battery area 220H and a third battery area 230H. For example, a first battery area 210H may be an area between a boundary of a separator 210 and a boundary of an anode layer 220 on the XY-plane.

A second battery area 220H may be an area where an anode layer 220 and a separator 210 are stacked together, excluding a third battery area 230H. For example, a second battery area 220H may be an area between a boundary of an anode layer 220 and a boundary of a cathode layer 230 on the XY-plane.

A third battery area 230H may be an area where a cathode layer 230, an anode layer 220, and a separator 210 are stacked together. For example, a third battery area 230H may be an area inside a boundary of a cathode layer 230 on the XY-plane.

In one embodiment, the size of an anode layer 220 may be larger than the size of a cathode layer 230. In one embodiment, the size of a separator 210 may be larger than the size of an anode layer 220. For example, the size may represent the length in the X-axis direction and the length in the Y-axis direction. As another example, the size may be the area on the XY-plane.

Referring to FIGS. 2A and 2B, in one embodiment, a cathode layer 230 may have a first length w1 in the X-axis direction, an anode layer 220 may have a second length w2 in the X-axis direction, and a separator 210 may have a third length w3 in the X-axis direction. A first length w1 may be shorter than a second length w2, and a second length w2 may be shorter than a third length w3. This is to prevent electrical contact between an anode layer 220 and a cathode layer 230.

In one embodiment, an anode 220 and a cathode may be aligned and stacked such that a distance w11 between a left end of an anode layer 220 and a left end of a cathode layer 230 is higher than a lower limit reference value, and a distance between a left end of an anode layer 220 and a left end of a cathode layer 230 is lower than an upper limit reference value.

When a distance w11 between left ends of an anode layer 220 and a cathode layer 230 is lower than a lower limit reference value, there is a possibility that the left ends of the anode layer 220 and the cathode layer 230 contact each other. In addition, when a distance w11 between left ends of an anode layer 220 and a cathode layer 230 is higher than an upper limit reference value, a distance w12 between right ends of an anode layer 220 and a cathode layer 230 becomes lower than a lower limit reference value, so there is a possibility that the right ends of the anode layer 220 and the cathode layer 230 contact each other.

In the present disclosure, through an X-ray image, it may be detected whether a distance w11 between left ends of an anode layer 220 and a cathode layer 230 or a distance w12 between right ends of an anode layer 220 and a cathode layer 230 is within a reference range to detect a defect in alignment of electrode layers 220 and 230 of a battery 200.

In one embodiment, an X-ray output portion 110 may irradiate X-rays a the boundary area of a battery 200. A boundary area may be an area including a boundary between an anode layer 220 and a separator 210 and a boundary between a cathode layer 230 and the anode layer 220. Here, the boundary between the anode layer 220 and the separator 210 may be one of a left end, a right end, a front end, and an rear end of the anode layer 220. The boundary between the cathode layer 230 and the anode layer 220 may be one of a left end, a right end, a front end, and a rear end of the cathode layer 230. Here, the boundary area may include at least one of a left boundary area, a right boundary area, a front end boundary area, and a rear end boundary area.

A left boundary area may be an area including a left end of an anode layer 220 and a left end of a cathode layer 230. Referring to FIGS. 2A and 2B, for example, X-rays may be irradiated to a plane 250LH of a left boundary area. In addition, X-rays may be irradiated to pass through a cross-section 250L of a left boundary area in the Z-axis direction.

A right boundary area may be an area including a right end of an anode layer 220 and a right end of a cathode layer 230. Referring to FIGS. 2A and 2B, for example, X-rays may be irradiated to a plane 250RH of a right boundary area. In addition, X-rays may be irradiated to pass through a cross-section 250R of a right boundary area in the Z-axis direction.

A front end boundary area may be an area including a front end of an anode layer 220 and a front end of a cathode layer 230. A rear end boundary area may be an area including a rear end of an anode layer 220 and a rear end of a cathode layer 230.

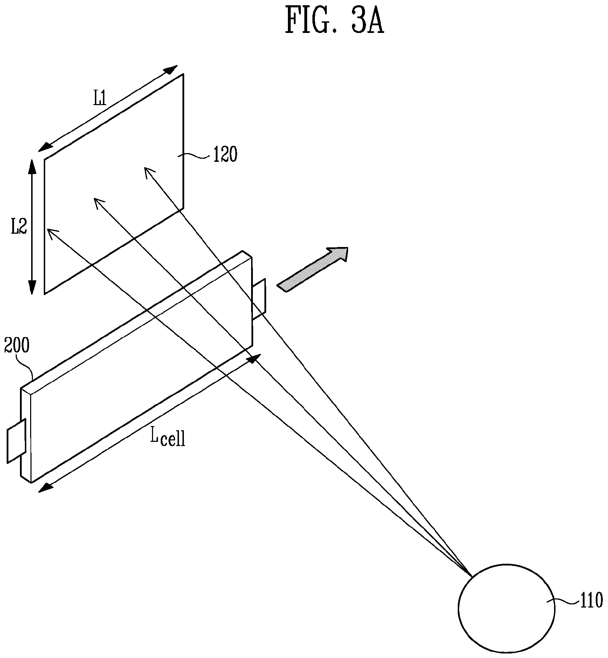

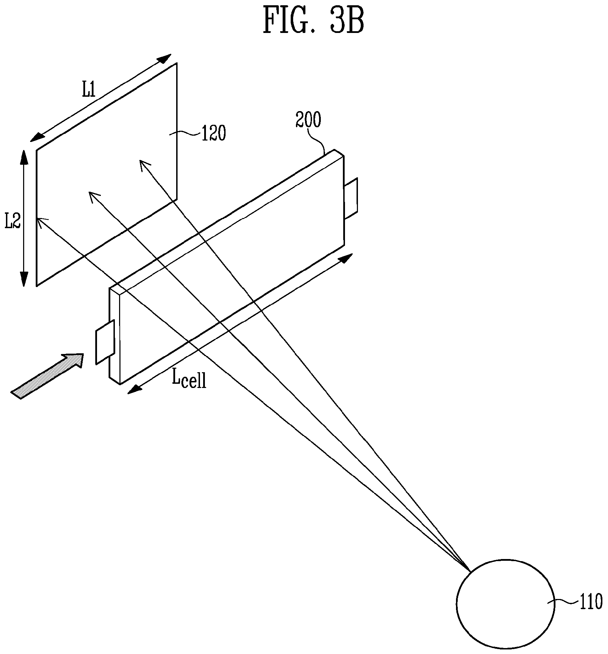

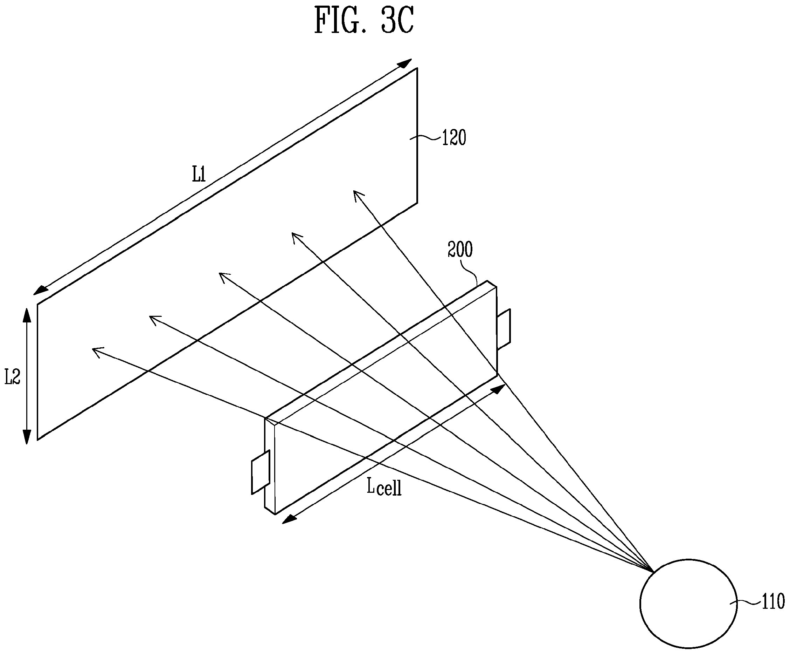

FIGS. 3A, 3B, and 3C show diagrams for explaining an X-ray detection portion according to one embodiment of the present disclosure.

Referring to FIGS. 3A and 3B, an X-ray detection portion 120 may include a flat panel detector. A flat panel detector may include a pixel array including a plurality of pixels. For example, a pixel array may include pixels arranged in m x n.

Pixels may each detect transmitted X-rays that have transmitted through a unit area of a battery 200 and acquire a sensing signal for the transmitted X-rays. For example, a sensing signal may be charge, current, or voltage. The level of a sensing signal may indicate the intensity of transmitted X-rays. Pixels may correspond to a unit area of a battery 200.

In one embodiment, the level of a sensing signal may be inversely proportional to the intensity of X-rays. For example, the lower the intensity of X-rays, a sensing signal of a higher level may be acquired. In another embodiment, the level of a sensing signal may be proportional to the intensity of X-rays.

In one embodiment, pixels may include a photo-conductor that directly converts X-rays into electrical signals. In another embodiment, pixels may include a scintillator that converts X-rays into visible light and a photo-diode that converts visible light into an electrical signal.

In one embodiment, an X-ray detection portion 120 may include a pixel calculation portion. The pixel calculation portion may receive a sensing signal and acquire a gray value corresponding to the level of the sensing signal. For example, a pixel operation portion may include an analog-to-digital converter that converts an analog signal into a digital signal.

In one embodiment, a first length L1 of a flat panel detector may be shorter than the length L_{cell} in a tab protrusion direction of a battery 200.

Accordingly, an image for an entire battery 200 may be acquired by acquiring images of the battery 200 multiple times while moving the battery 200 in one direction using a transfer portion. In other words, an X-ray image of a battery 200 may be acquired by merging a plurality of images acquired while moving the battery 200.

In another embodiment, as shown in FIG. 3C, a first length L1 of a flat panel detector may be longer than a length L_{cell} in a tab protrusion direction of a battery 200. In addition, a first length L1 of a flat panel detector may be longer than a second length L2 of the flat panel detector.

For example, as illustrated in FIG. 3C, a first length L1 and a second length L2 of a flat panel detector may be optimized to fit the shape of a battery 200, and as an X-ray imaging area is thereby increased, an image of the entire battery 200 may be acquired without moving the battery 200. In other words, the number of time of measurement and the measurement time required to acquire an X-ray image of an entire battery 200 may be reduced.

In one embodiment, unlike what is illustrated in FIGS. 3A to 3C, a gray value may be acquired using a time delay integration (TDI) method. In this case, an X-ray detection portion 120 may include a plurality of line scanners. A line scanner may include a plurality of pixels arranged in a row or column direction. In this case, sensing signals acquired by passing X-rays multiple times in one direction through a unit area of a battery 200 may be accumulated. The accumulated sensing signals may be treated as one sensing signal for a unit area. In other words, a clearer image may be acquired by overlapping sensing signals acquired as many as the number of line scanners to create one image.

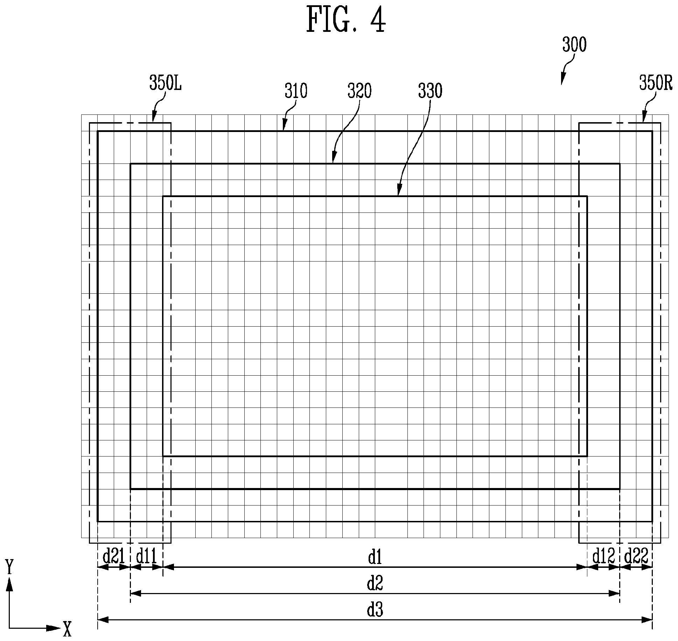

FIG. 4 shows a diagram for explaining an X-ray image according to one embodiment of the present disclosure.

Referring to FIG. 4, an X-ray image 300 according to one embodiment may include a plurality of gray values. An X-ray image 300 may be generated by a signal processing portion 130 by detecting X-rays that have transmitted through a battery 200 as shown in FIGS. 2A and 2B. A gray value may represent the intensity of X-rays. Gray values may be arranged according to row and column directions. For example, a column direction may be the X-axis direction, and a row direction may be the Y-axis direction.

An X-ray image 300 may include a plurality of areas 310 to 330. A plurality of areas 310 to 330 may include a separator area 310, an anode area 320, and a cathode area 330. Each area 310 to 330 may include a plurality of gray values. In other words, each area 310 to 330 may be a set of gray values positioned at different positions.

A separator area 310 may represent a first battery area 210H. For example, a separator area 310 may include gray values acquired by detecting X-rays that transmitted through a first battery area 210H. An anode area 320 may represent a second battery area 220H. For example, a n anode area 320 may include gray values acquired by detecting X-rays that transmitted through a second battery area 220H. A cathode area 330 may represent a third battery area 230H. For example, a cathode area 330 may include gray values acquired by detecting X-rays that transmitted through a third battery area 230H.

Meanwhile, the intensity of X-rays that have transmitted through an area in which a third battery area 230H is overlapped with a separator 210, an anode layer 220, and a cathode layer 230 together may be lower than the intensity of X-rays that have transmitted through an area in which a second battery area 220H is overlapped with a separator 210 and an anode layer 220, because the areas are composed of different materials. Accordingly, the intensity of X-rays varies depending on the area of a battery 200. Since a gray value represents the intensity of X-rays, the gray value may vary depending on the area. In this case, each area may be distinguished according to the gray value in an X-ray image.

In one embodiment, the intensity of X-rays may be inversely proportional to a gray value. In this case, a gray value included in a cathode area 330 may be greater than a gray value included in an anode area 320. A gray value included in an anode area 320 may be greater than a gray value included in a separator area 310. However, this is only an example, and the intensity of X-rays may be proportional to a gray value. Hereinafter, the intensity of X-rays will be explained assuming that it is inversely proportional to a gray value.

Meanwhile, a left target area 350L of an X-ray image 300 may correspond to a left boundary area of a battery 200. A right target area 350R of an X-ray image 300 may correspond to a right boundary area of a battery 200. A left target area 350L and a right target area 350R may include a first edge of an anode area 320 and a second edge of a cathode area 330, respectively. A first edge is a part representing an outermost edge or an outermost boundary of an anode area 320. A first edge may be one of a left edge, a right edge, a front end edge, and a rear end edge of an anode area 320. A second edge is a part representing an outermost edge or an outermost boundary of a cathode area 330. A second edge may be one of a left edge, a right edge, a front end edge, and a rear end edge of a cathode area 330.

In the X-axis direction, a length d1 between edges of a cathode area 330 may correspond to a first length w1 of a cathode layer 230. In the X-axis direction, a length d2 between edges of an anode area 320 in the X-axis direction may correspond to a second length w2 of an anode layer 220. In the X-axis direction, a length d3 between edges of a separator area 310 may correspond to a third length w3 of a separator 210.

A distance d11 between a left edge of an anode area 320 and a left edge of a cathode area 330 may correspond to a distance w11 between a left end of an anode layer 220 and a left end of a cathode layer 230. A distance d12 between a right edge of an anode area 320 and a right edge of a cathode area 330 may correspond to a distance w12 between a right end of an anode layer 220 and a right end of a cathode layer 230.

An inspection portion 140 may determine that a battery 200 is defective when a distance d11 and d12 between a first edge of an anode area 320 and a second edge of a cathode area 330 is lower than or equal to a lower limit reference value. An inspection portion 140 may determine that a battery 200 is defective when a distance d11 and d12 between a first edge of an anode area 320 and a second edge of a cathode area 330 is higher than or equal to an upper limit reference value. A lower limit reference value and an upper limit reference value may be preset values. A lower limit reference value and an upper limit reference value may be stored in a memory.

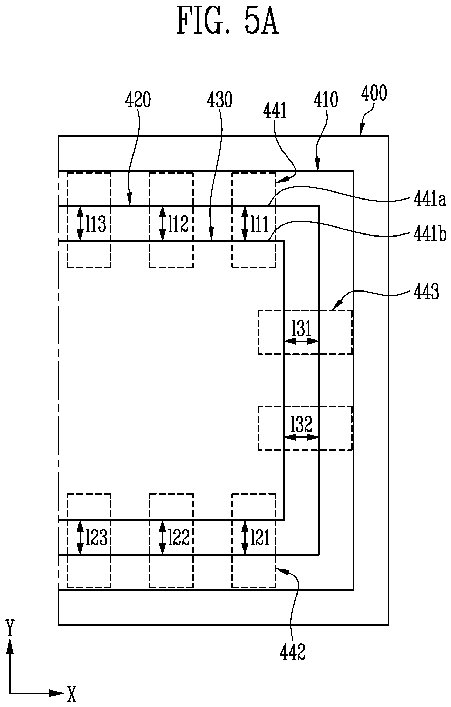

FIG. 5A shows a diagram for explaining an area of interest according to one embodiment of the present disclosure.

Referring to FIG. 5A, an inspection portion 140 according to one embodiment may select areas of interest 441, 442, and 443. For example, an inspection portion 140 may determine an area including a part 441a of a first edge of an anode area 420 and a part 441b of a second edge of a cathode area 430 in an X-ray image 400 as an area of interest 441. In this case, the area of interest 441 may include a part 441a of a first edge of an anode area 420 and a part 441b of a second edge of a cathode area 430 in the X-ray image 400.

The inspection portion 140 may measure a distance 111 between a part of a first edge 441a and a part 441b of a second edge included in an area of interest 441. The inspection portion 140 may measure the distance l11 by calculating the difference between the positions or coordinates of two gray values. One of the two gray values may be included in a part 441a of the first edge, and the other gray value may be included in a part 441b of the second edge.

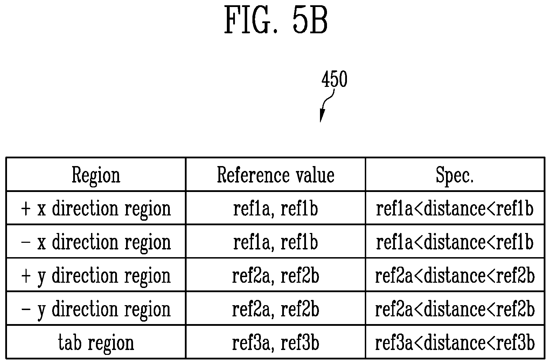

FIG. 5B shows a diagram for explaining reference information according to one embodiment of the present disclosure.

Referring to FIGS. 5A and 5B, the inspection portion 140 according to one embodiment may determine that a battery 200 is defective according to results of comparing measured distances l11 to 113,121 to l23, and 131 to 132 and reference values ref1a to ref3a and ref1b to ref3b. Here, the reference values ref1a to ref3a and ref1b to ref3b may include lower limit reference values ref1a to ref3a and upper limit reference values ref1b to ref3b.

In one embodiment, a memory may store reference information 450. Reference information 450 may include information about lower limit reference values ref1a to ref3a and upper limit reference values ref1b to ref3b corresponding to the position of an area of interest. The position of an area of interest may be included in one of a left border area (-X-axis direction), a right border area (+X-axis direction), a front border area (-Y-axis direction), a rear border area (+Y-axis direction), and a tab area. A tab area may represent a part where an electrode tab is connected to an electrode layer. For example, an inspection portion 140 may determine that a battery 200 is defective when any one of the conditions for comparing a measured distance within an area of interest and a reference value included in reference information 450 is not satisfied.

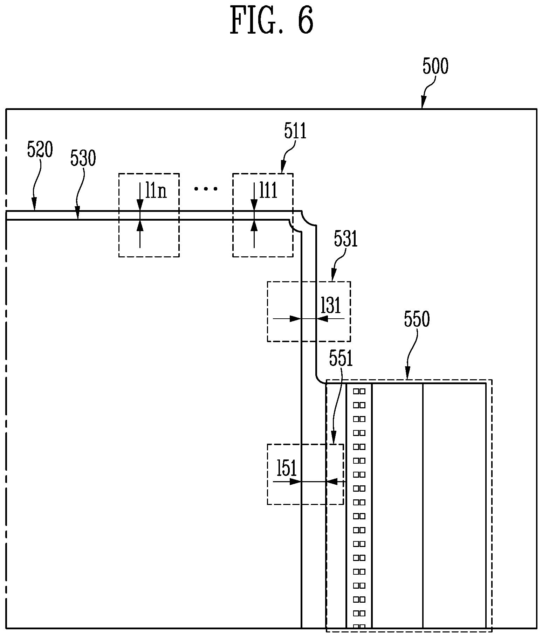

FIG. 6 shows a diagram for explaining an X-ray image according to one embodiment of the present disclosure.

Referring to FIG. 6, an X-ray inspection device 100 according to one embodiment of the present disclosure may detect X-rays that have transmitted through a battery 200 and acquire an X-ray image 500.

In one embodiment, a battery 200 may further include an electrode tab connected to one of a cathode layer 230 and an anode layer 220. An electrode tab may be either an anode tab connected to an anode layer 220 or a cathode tab connected to a cathode layer 230.

An inspection portion 140 may determine an anode area 520, a cathode area 530, and an electrode tab area 550 in an X-ray image 500 according to gray values included in the X-ray image 500. An electrode tab area 550 may include gray values representing an electrode tab.

In one embodiment, an inspection portion 140 may determine whether a battery 200 is defective based on the distance between a first edge of an anode area 520 and a second edge of a cathode area 530 in an X-ray image 500.

For example, an inspection portion 140 may select a first area of interest 511. A first area of interest 511 may include a part of a first edge of an anode area 520 and a part of a second edge of a cathode area 30. An inspection portion 140 may measure the distance 111 between a part of a first edge and a part of a second edge included in a first area of interest 511.

An inspection portion 140 may load a second lower limit reference value ref2a and a second upper limit reference value ref2b corresponding to a rear end boundary area (+Y-axis direction) where a first area of interest 511 is position, from reference information 450.

An inspection portion 140 may determines that a battery 200 is defective when a measured distance 111 is lower than or equal to a second lower limit reference value ref2a or when a measured distance 111 is higher than or equal to a second upper limit reference value ref2b.

In the same manner, an inspection portion 140 may select a second area of interest 531 and measure the distance l31 between edges included in the second area of interest 531. Then, the inspection portion 140 may determine that a battery 200 is defective when the measured distance l31 is lower than or equal to a first lower limit reference value ref1a or when the measured distance 131 is higher than or equal to a first upper limit reference value ref1b.

In one embodiment, an inspection portion 140 may select a plurality areas of interest position in a same boundary area. For example, an inspection portion 140 may select a plurality of area of interest positioned in a rear end boundary area (+Y-axis direction). In this case, the inspection portion 140 may measure the distances l11 to l1n between a first edge and a second edge included in each of the plurality of areas of interest and acquire an average value of the measured distances l11 to l1n. The inspection portion 140 may determine that a battery 200 is defective when the average value is lower than or equal to a second lower limit reference value ref2a or when the average value is higher than or equal to a second upper limit reference value ref2b.

In one embodiment, an inspection portion 140 may determine whether a battery 200 is defective based on the distance between a second edge of a cathode area 530 and a third edge of an electrode tab area 550 in an X-ray image 500.

For example, an inspection portion 140 may select a third area of interest 551. A third area of interest 551 may include a part of a second edge of a cathode area 530 and a part of a third edge of an electrode tab area 550. An inspection portion 140 may measure the distance l51 between a part of a second edge and a part of a third edge included in a third area of interest 551.

An inspection portion 140 may load a third lower limit reference value ref3a and a third upper limit reference value ref3b corresponding to an electrode tab area 550 where a part of a third area of interest 551 is position, from reference information 450.

An inspection portion 140 may determine that a battery 200 is defective when a measured distance l51 is lower than or equal to a third lower limit reference value ref3a or when a measured distance l51 is higher than or equal to a third upper limit reference value ref3b.

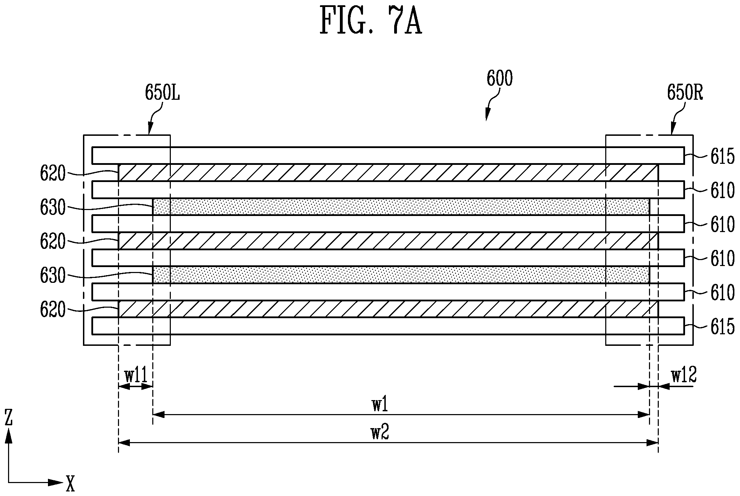

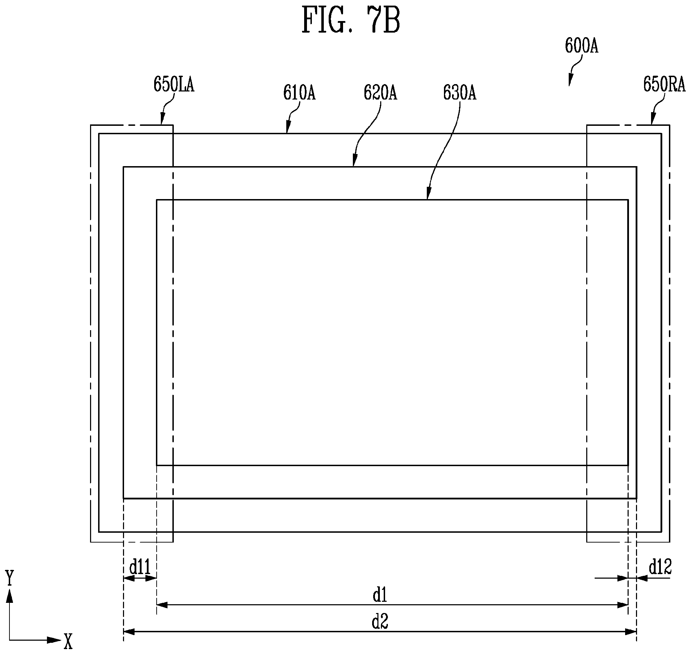

FIGS. 7A and 7B show diagrams for explaining a battery defect according to one embodiment of the present disclosure.

Referring to FIG. 7A, a battery 600 according to one embodiment may include a plurality of electrode layers 620 and 630, a separator 610, and a pouch 615. A plurality of electrode layers 620 and 630 may include an anode layer 620 and a cathode layer 630. An anode layer 620 and a cathode layer 630 may be alternately stacked along the Z-axis direction.

Here, it is assumed that a cathode layer 630 is aligned to be biased in the +X-axis direction. In this case, the distance w11 between left ends of an anode layer 220 and a cathode layer 230 may be greater than an upper limit reference value, and the distance w12 between right ends of a cathode layer 220 and an anode layer 230 may be smaller than a lower limit reference value. In other words, the battery 600 may have a defective electrode alignment state.

According to an embodiment of the present disclosure, an X-ray inspection device 100 may determine that a battery 600 is defective through an X-ray image of the battery 600.

Referring to FIG. 7B, an X-ray inspection device 100 may irradiate X-rays to a battery 600 and detect the X-rays that have transmitted through the battery 600 to acquire an X-ray image 600A. An X-ray image 600A may include a separator area 610A, an anode area 620A, and a cathode area 630A.

An anode area 620A of an X-ray image 600A may be an area between a boundary of an anode layer 620 and a boundary of a cathode layer 630. A cathode area 630A of an X-ray image 600A may be an area inside a boundary of a cathode layer 630.

A left target area 650LA of an X-ray image 600A may correspond to a left boundary area 650L of a battery 600. A right target area 650RA of an X-ray image 600A may correspond to a right boundary area 650R of a battery 600.

An X-ray inspection device 100 may measure the distance d11 between a first edge of an anode area 620A and a second edge of a cathode area 630A included in a left target area 650LA. An X-ray inspection device 100 may determine that a battery 600 is defective when the measured distance d11 is higher than or equal to an upper limit reference value or when the measured distance d11 is lower than or equal to a lower limit reference value. Here, when it is assumed that the measured distance d11 is higher than or equal to the upper limit reference value, the X-ray inspection device 100 may determine that the battery 600 is defective.

An X-ray inspection device 100 may measure the distance d12 between a first edge of an anode area 620A and a second edge of a cathode area 630A included in a right target area 650RA, and determine that a battery 600 is defective when the measured distance d12 is higher than or equal to an upper limit reference value or when the measured distance d12 is lower than or equal to a lower limit reference value. Here, when it is assumed that the measured distance d12 is lower than or equal to the lower limit reference value, the X-ray inspection device 100 may determine that the battery 600 is defective.

As described above, an X-ray inspection device 100 according to one embodiment of the present disclosure may quickly and accurately detect a defect in alignment of electrode layers in batteries 200 and 600 without destructing the batteries 200 and 600.

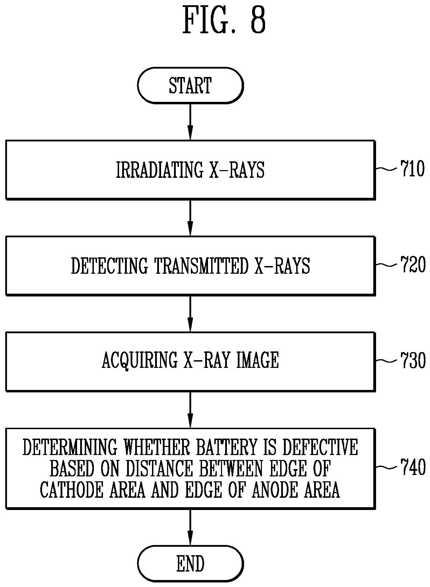

FIG. 8 shows a diagram for explaining an X-ray inspection method according to one embodiment of the present disclosure.

Referring to FIG. 8, an X-ray inspection method of an X-ray inspection device 100 according to one embodiment may include: a step 710 of irradiating X-rays to a battery 200; a step 720 of detecting the X-rays that have transmitted through the battery 200; a step 730 of acquiring an X-ray image; and a step 740 of determining whether the battery 200 is defective based on a distance between an edge of a cathode area and an edge of an anode area.

Specifically, X-rays may be irradiated to a battery 200 in a stacking direction (710).

A battery 200 may include an anode layer 220, a cathode layer 230, and a separator 210. In one embodiment, an anode layer 220 may have a size larger than the size of a cathode layer 230. A stacking direction may be a direction in which an anode layer 220 and a cathode layer 230 are stacked. X-rays may be transmitting electromagnetic waves.

In addition, X-rays that have transmitted through a battery 200 may be detected to acquire a plurality of gray values (720). A larger gray value may indicate that the intensity of the transmitted X-rays is lower.

In addition, an X-ray image may be acquired (730). An X-ray image may include a plurality of gray values. A plurality of gray values included in an X-ray image may be arranged along to row and column directions.

In addition, it may be determined whether a battery 200 is defective based on a distance between a first edge of an anode area and a second edge of a cathode area in an X-ray image (740). An anode area may include gray values representing an anode layer 220. A cathode area may include gray values representing a cathode layer 230.

In one embodiment, an area of interest including a part of a first edge and a part of a second edge may be selected in an X-ray image. In addition, a distance between a part of a first edge and a part of a second edge included in an area of interest may be measured. In addition, according to results of comparing the measured distance and a reference value, a battery 200 may be determined to be defective.

In one embodiment, a reference value may include a lower limit reference value and an upper limit reference value. In this case, in a step of determining whether a battery 200 is defective may be determine that a battery 200 is defective when the measured distance is lower than or equal to a lower limit reference value or when the measured distance is higher than or equal to an upper limit reference value.

In one embodiment, reference information about a lower limit reference value and a upper limit reference value corresponding to the position of an area of interest may be stored. In this case, through the reference information, a lower limit reference value and an upper limit reference value corresponding to the position of the area of interest may be determined.

In one embodiment, a plurality of areas of interest, each including a part of a first edge and a part of a second edge, may be selected in an X-ray image. Distances between a part of a first edge and a part of a second edge included in each of the plurality of areas of interest may be measured. In addition, a battery 200 may be determined to be defective when an average value of the distances is lower than a lower limit reference value or when the average value is higher than an upper limit reference value.

In one embodiment, a battery 200 may further include an electrode tab connected to one of a cathode layer 230 and an anode layer 220. In this case, it may be determined whether a battery 200 is defective based on the distance between a second edge and a third edge of an electrode tab area in an X-ray image. An electrode tab area may include gray values representing an electrode tab.

### [Reference numerals]

100: X-ray inspection device
110: X-ray output portion
120: X-ray detection portion
130: signal processing portion
140: inspection portion
150: transfer portion
160: control portion
200: battery
210: separator
220: anode layer
230: cathode layer

## Claims

1. An X-ray inspection device comprising:
an X-ray output portion irradiating X-rays to a battery including a cathode, a separator, and an anode in a stacking direction of the cathode and the anode;
an X-ray detection portion acquiring a plurality of gray values based the X-rays that have transmitted through the battery;
a signal processing portion acquiring an X-ray image including the plurality of gray values; and
an inspection portion determining whether the battery is defective based on a distance between a first edge of an anode area including gray values representing the anode layer and a second edge of a cathode area including gray values representing the cathode layer in the X-ray image.

2. The X-ray inspection device according to claim 1, wherein the inspection portion selects an area of interest including a part of the first edge and a part of the second edge in the X-ray image, measures a distance between a part of the first edge and a part of the second edge included in the area of interest, and determines whether the battery is defective based on results of comparing the measured distance with a reference value.

3. The X-ray inspection device according to claim 2, wherein the reference value includes a lower limit reference value and an upper limit reference value, and the inspection portion determines that a battery is defective when the measured distance is lower than or equal to the lower limit reference value or when the measured distance is higher than or equal to the upper limit reference value.

4. The X-ray inspection device according to claim 3, further comprising a memory storing reference information on a lower limit reference value and an upper limit reference value corresponding to position of the area of interest,
wherein the inspection portion determines the lower limit reference value and the upper limit reference value corresponding to the position of the area of interest through the reference information.

5. The X-ray inspection device according to claim 1, wherein the inspection portion selects a plurality of areas of interest, each including a part of the first edge and a part of the second edge in the X-ray image, measures distances between a part of the first edge and a part of the second edge each included in the plurality of areas of interest, and determines that the battery is defective when an average value of the distances is smaller than or equal to a lower limit reference value or when the average value is greater than an upper limit reference value.

6. The X-ray inspection device according to claim 1, wherein the battery further includes an electrode tab connected to one of the cathode layer and the anode layer, and the inspection portion determines whether the battery is defective based on a distance between the second edge and a third edge of an electrode tab area including gray values representing the electrode tab in the X-ray image.

7. The X-ray inspection device according to claim 1, wherein the anode layer has a size larger than the size of the cathode layer.

8. The X-ray inspection device according to claim 1, wherein the X-ray output portion irradiates the X-rays to a boundary area including a boundary between the anode layer and the separator and a boundary between the cathode layer and the anode layer in the battery in the stacking direction.

9. The X-ray inspection device according to claim 1, wherein the X-ray detection portion includes a flat panel detector including a plurality of pixels each detecting X-rays.

10. The X-ray inspection device according to claim 9, wherein a first length of the flat panel detector in a first direction, which is a direction in which a cathode tab or an anode tab protrudes from the cathode layer or the anode layer, is longer than the length of the battery in the first direction.

11. The X-ray inspection device according to claim 10, wherein a second length of the flat panel detector in a second direction perpendicular to the first direction and the stacking direction of the cathode layer and the anode layer is shorter than the first length of the flat panel detector.

12. The X-ray inspection device according to claim 1, wherein the X-ray detection portion includes: a plurality of line scanners detecting, at different times, transmitted X-rays that have transmitted through a unit area of the battery among the X-rays that have transmitted through the battery, and acquiring each of sensing signals for the transmitted X-rays; and
a pixel operation portion processing a value corresponding to a final sensing signal in which the sensing signals are accumulated as a gray value corresponding to the unit area among the plurality of gray values.

13. The X-ray inspection device according to claim 1, wherein the inspection portion determines an area corresponding to the battery in the X-ray image and sets the selected area within an area corresponding to the battery.

14. The X-ray inspection device according to claim 13, wherein the inspection portion determines the area of interest based on a preset pattern included in the X-ray image.

15. The X-ray inspection device according to claim 13, wherein the inspection portion determines the area of interest based on a change in a gray value in a preset direction in the X-ray image.

16. An X-ray inspection method comprising:
a step of irradiating X-rays to a battery including a cathode, a separator, and an anode in a stacking direction of the cathode and the anode;
a step of acquiring a plurality of gray values by detecting the X-rays that have transmitted through the battery;
a step of acquiring an X-ray image including the plurality of gray values; and
a step of determining whether the battery is defective based on a distance between a first edge of an anode area including gray values representing the anode layer and a second edge of a cathode area including gray values representing the cathode layer in the X-ray image.

17. The X-ray inspection method according to claim 16, wherein a step of determining whether the battery is defective includes:
a step of selecting an area of interest including a part of the first edge and a part of the second edge in the X-ray image;
a step of measuring a distance between a part of the first edge and a part of the second edge included in the area of interest; and
a step of determining whether the battery is defective based on results of comparing the measured distance with a reference value.

18. The X-ray inspection method according to claim 17, wherein the reference value includes a lower limit reference value and an upper limit reference value, and in the step of determining whether the battery is defective, the battery is determined to be defective when the measured distance is lower than or equal to the lower limit reference value or when the measured distance is higher than the upper limit reference value.

19. The X-ray inspection method according to claim 18, further comprising:
a step of storing reference information on a lower limit reference value and an upper limit reference value corresponding to position of the area of interest,
a step of determining the lower limit reference value and the upper limit reference value corresponding to the position of the area of interest through the reference information.

20. The X-ray inspection method according to claim 16, wherein the step of determining whether the battery is defective includes:
a step of selecting a plurality of areas of interest, each including a part of the first edge and a part of the second edge in the X-ray image;
a step of measuring distances between a part of the first edge and a part of the second edge each included in the plurality of areas of interest; and
a step of determining that the battery is defective when an average value of the distances is smaller than or equal to a lower limit reference value or when the average value is greater than an upper limit reference value.

21. The X-ray inspection method according to claim 16, wherein the battery further includes an electrode tab connected to one of the cathode layer and the anode layer, and in the step of determining whether the battery is defective, whether the battery is defective is determined based on a distance between the second edge and a third edge of an electrode tab area including gray values representing the electrode tab in the X-ray image.

22. The X-ray inspection method according to claim 16, wherein the anode layer has a size larger than the size of the cathode layer.
